# NOUVEAU FASCICULE DE BREVET EUROPEEN

(11) **EP 0 680 847 B2**
(45) Date de publication et mention de la décision concernant l'opposition: **17.07.2002**
(45) Mention de la délivrance du brevet: 29.12.1997
(21) Numéro de dépôt: 95401004.7
(22) Date de dépôt: 02.05.1995
(51) Int. Cl.: B60R 16/02

(54) **Contacteur électrique tournant perfectionné**
Drehbares elektrisches Verbindungselement
Rotary contactor

(30) Priorité: 04.05.1994 FR 9405461
(43) Date de publication de la demande: 08.11.1995
(73) Titulaire: MAGNETI MARELLI FRANCE, 92000 Nanterre (FR)
(72) Inventeur: Hallet, Michel, F-14320 Clinchamps sur Orne (FR)
(74) Mandataire: Texier, Christian

(56) Documents cités:
- EP-A- 0 195 830
- WO-A-91/17592
- DE-A- 4 233 499
- US-A- 4 797 109

## Description

La présente invention concerne le domaine des contacteurs électriques tournants.

Plus précisément, la présente invention concerne les contacteurs du type comprenant:
- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci.

La présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

Le document DE-A-4233499 décrit un contacteur électrique tournant comprenant deux éléments susceptibles de rotation relative et un conducteur souple placé entre ces deux éléments, ainsi que des moyens pour immobiliser à rotation relative les deux éléments du contacteur avant montage. Selon le document DE-A-4233499, le verrouillage temporaire entre les deux éléments du contacteur est obtenu grâce à une possibilité de déplacement axial relatif entre ces deux éléments entre une position de verrouillage dans laquelle les deux éléments sont en prise par des dentures périphériques et une position de travail dans laquelle après décalage axial, les deux éléments sont susceptibles de déplacement relatif à rotation. Pour assurer ce déplacement relatif et permettre, par exemple, un reverrouillage temporaire après un premier assemblage, au cours d'une opération de maintenance, il est prévu que l'un des éléments porte deux barreaux équipés de languettes élastiques venant en prise avec le support complémentaire, par exemple le volant pour retenir cet élément.

La présente invention a maintenant pour but de perfectionner les contacteurs électriques tournants connus.

Un but de la présente invention est en particulier de proposer un nouveau contacteur électrique tournant qui permette de faciliter le processus d'assemblage.

Ce but est atteint dans le cadre de la présente invention grâce à un contacteur du type défini en revendication 1 annexée, laquelle est délimitée sous forme d'un préambule et d'une partie caractérisante, par rapport au document DE-A-4233499.

Selon une autre caractéristique avantageuse de la présente invention, lesdites languettes sont adaptées pour supprimer le jeu entre l'élément qui les porte et l'organe associé qui reçoit celui-ci sur le site d'utilisation, par exemple le volant du véhicule automobile.

D'autres caractéristiques, buts et avantages de la présente invention apparaîtront à la lecture de la description détaillée qui va suivre, et en regard des dessins annexés donnés à titre d'exemple non limitatif et sur lesquels :

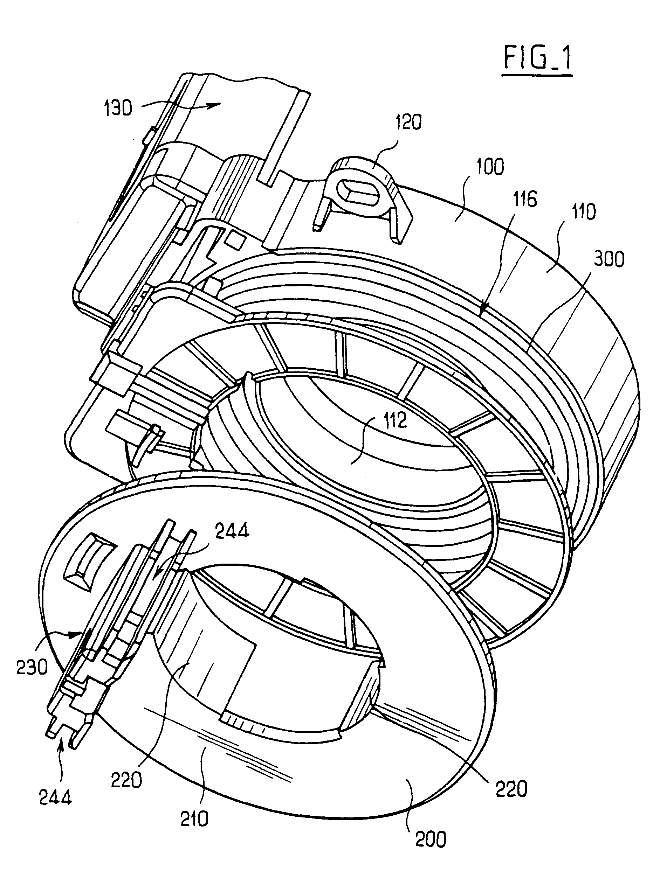

- la figure 1 représente une première vue schématique en perspective d'un contacteur électrique conforme à la présente invention,
- la figure 2 représente une seconde vue schématique en perspective du même contacteur,

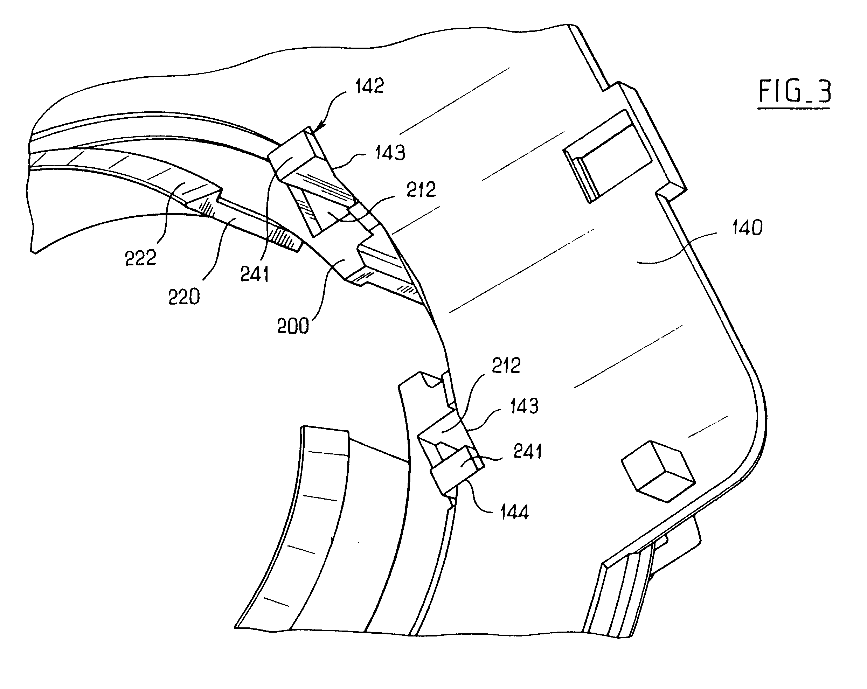

- la figure 3 représente une vue de détail agrandie du contacteur conforme à la présente invention,

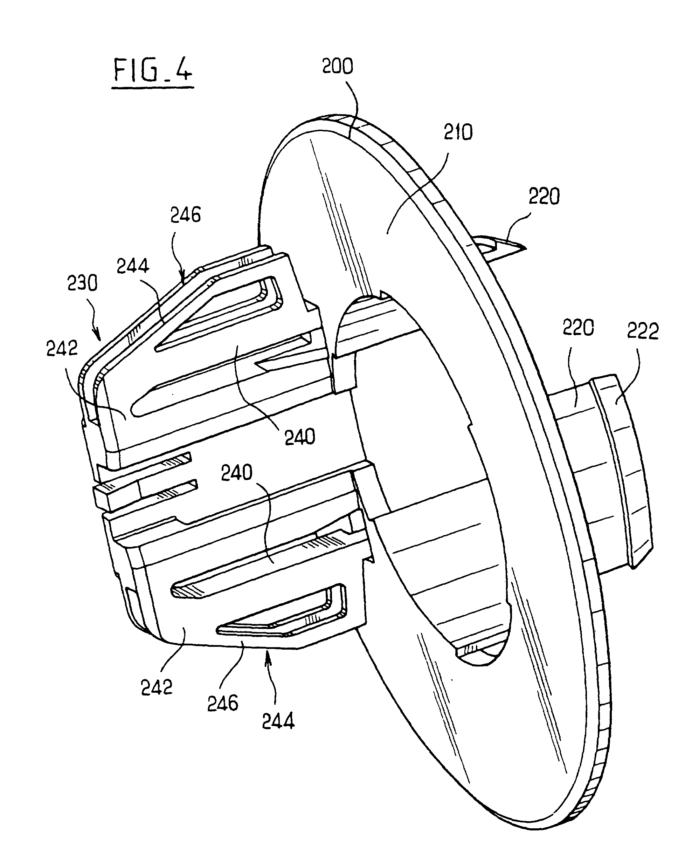

- la figure 4 représente une vue en perspective d'un couvercle rotatif du contacteur conforme à la présente invention,

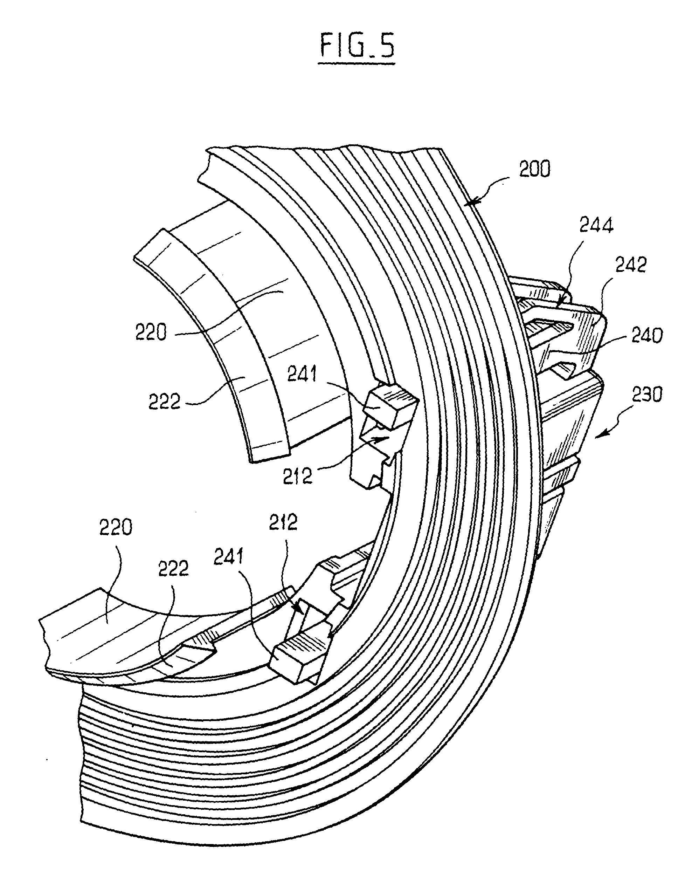

- la figure 5 représente une seconde vue en perspective partielle agrandie du couvercle rotatif conforme à la présente invention,
- la figure 6 représente une vue en perspective du couvercle pivotant similaire à la figure 4 et illustre le déplacement de languette lors de la mise en place du contacteur,

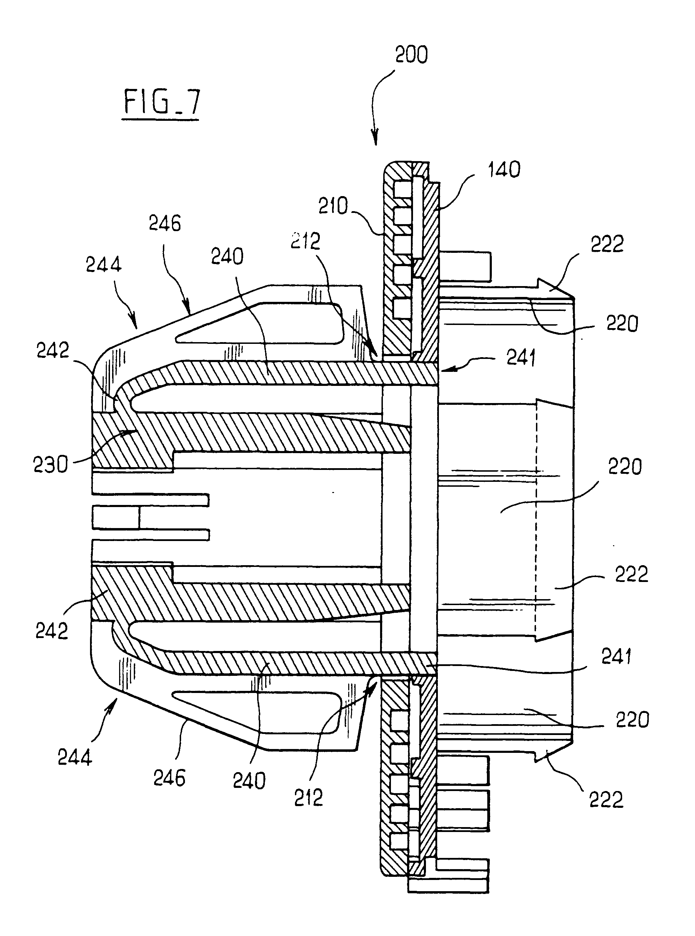

- la figure 7 représente une vue partielle en coupe axiale longitudinale d'un contacteur conforme à la présente invention, et
- les figures 8 à 11 représentent schématiquement des vues en coupe similaires à la figure 7 du même contacteur lors de la phase de mise en place de celui-ci.

Le contacteur électrique tournant représenté sur les figures annexées comprend essentiellement, un boîtier fixe 100, un couvercle rotatif 200 et un conducteur électrique souple 300.

Le boîtier fixe 100 peut faire l'objet de nombreux modes de réalisation.

De préférence, tout comme le couvercle rotatif 200, le boîtier fixe 100 est réalisé par moulage en matière plastique.

Selon le mode de réalisation particulier et non limitatif représenté sur les figures annexées, le boitier 100 comprend essentiellement deux parois circulaires concentriques 110, 112 reliées entre elles par une paroi de base 114 en forme de couronne. Les parois 110, 112 et 114 précitées délimitent ainsi une chambre annulaire 116 apte à contenir le conducteur 200.

La paroi cylindrique externe 110 est pourvue de préférence de points de fixation 120 formés par exemple d'oeillets comme représenté sur les figures annexées.

En outre, la paroi cylindrique extérieure 110 est munie, de préférence sur sa périphérie extérieure, d'un corps de connecteur 130.

Le corps de connecteur 130 comprend des contacts électriques 131 conçus pour être reliés respectivement à des pistes du conducteur souple 300 ou encore est adapté pour recevoir une extrémité de ce conducteur souple 300.

Le corps de connecteur 130 s'étend avantageusement axialement, c'est-à-dire dans une direction générale parallèle à l'axe des parois 110, 112.

Le couvercle 200 peut également faire l'objet de nombreux modes de réalisation. Selon le mode de réalisation particulier représenté sur les figures annexées, et non limitatif, le couvercle 200 comprend essentiellement une paroi de base 210 plane en forme de couronne, coaxiale au boîtier 100. La paroi 210 est munie sur sa périphérie interne d'un fût cylindrique 220 ou de différents segments cylindriques équi-répartis autour de son axe, comme représenté sur les figures annexées. Ce fût 220 ou les secteurs composant celui-ci sont engagés dans l'espace interne du boîtier 100. Ainsi, le couvercle 200 est monté et guidé à rotation sur le boîtier 100.

Le couvercle 200 est retenu à translation sur le boîtier 100 par tout moyen approprié, par exemple à l'aide de dents 222 en saillie sur l'extrémité du fût 220 ou des segments composants ce füt 220, lesquelles dents 222 viennent en prise avec la paroi cylindrique interne 112 du boîtier.

De préférence, le couvercle 210 est muni également d'un corps de connecteur 230, avantageusement au niveau de sa périphérie interne, sur sa face opposée au fût 220. Le corps de connecteur 230 s'étend dans une direction axiale, c'est-à-dire parallèlement à l'axe du couvercle 200 et du boîtier 100.

Ce corps de connecteur 230 est également muni de contacts électriquement conducteurs adaptés pour venir en liaison avec des pistes respectives du conducteur souple 300, ou encore le corps de connecteur 230 est adapté pour recevoir la seconde extrémité de ce conducteur 300.

A l'utilisation, le couvercle pivotant 200 est relié par tout moyen approprié, à rotation, avec le volant du véhicule automobile, tandis que le boitier 100 est fixé sur un organe fixe du véhicule, par exemple la colonne de direction.

Le conducteur souple 300 peut également faire l'objet de nombreux modes de réalisation. Il peut s'agir par exemple d'un faisceau de fils électriquement conducteurs isolés, ou encore de préférence d'un circuit imprimé ou d'un film plastique souple pourvu de plusieurs pistes métallisées parallèles.

Comme on l'a mentionné précédemment, dans le cadre de la présente invention, l'un au moins de ces éléments 100, 200 comprend au moins une languette élastique 240 adaptée pour être sollicitée à déplacement lors de la mise en place du contacteur sur son site d'utilisation.

Plus précisément selon la présente invention il est prévu deux languettes élastiques 240 sur le corps de connecteur 230 du couvercle pivotant 200.

Plus précisément encore, selon le mode de réalisation représenté sur les figures annexées, le corps de connecteur 230 comprend un bloc venu de moulage avec le couvercle 200 sur la périphérie interne de la paroi de base en couronne 210 composant celui-ci. Ce bloc formant le corps de connecteur 230 présente une symétrie par rapport à un plan axial, c'est à dire un plan passant par l'axe du couvercle 200. Ce bloc a ainsi la forme générale d'une lame disposée tangentiellement par rapport à la périphérie interne de la couronne 210.

Les deux languettes 240 sont venues de moulage respectivement sur les flancs du corps de connecteur 230.

Les languettes 240 s'étendent dans une direction générale axiale, c'est à dire sensiblement parallèlement à l'axe du couvercle 200.

Les languettes 240 peuvent faire l'objet de nombreux modes de réalisation. Selon le mode de réalisation particulier et non limitatif représenté sur les figures annexées, chaque languette 240 présente une section rectangulaire, avantageusement carré. Elle se raccorde sur le sommet du corps de connecteur 230 opposé à la paroi de base 210 par l'intermédiaire d'une zone d'articulation venue de matière 242 de faible largeur.

Par ailleurs les languettes 240 ont une longueur supérieure à celle du corps de connecteur 230.

Les languettes 240 traversent, libres de déplacement, la plaque de base 210 du couvercle 200, au niveau de lumières 212 formées dans celle-ci.

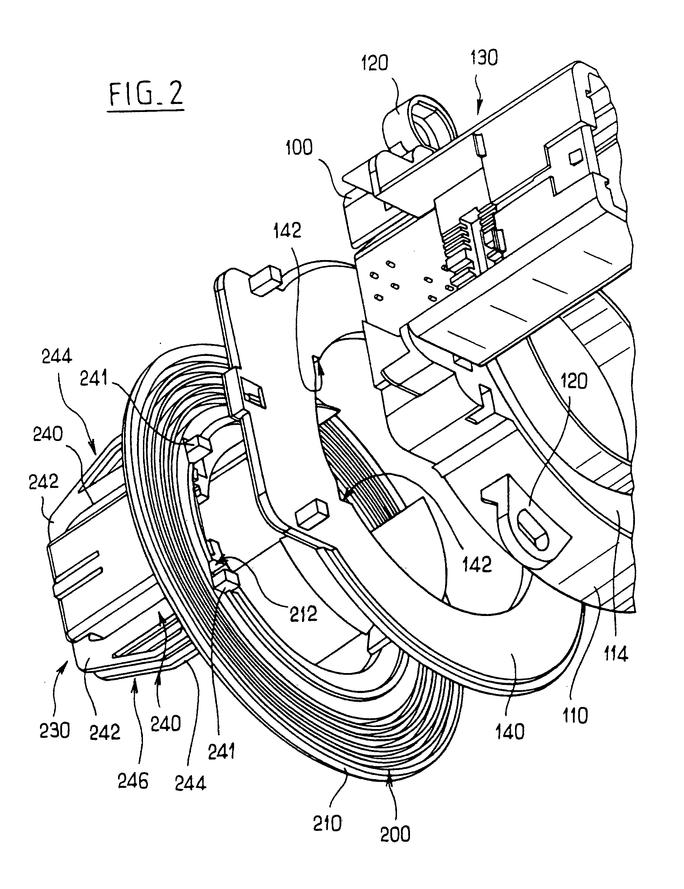

Ainsi les languettes 240 s'étendent au delà de la plaque de base 210, vers le boitier 100, comme on le voit par exemple sur la figure 2. Sur cette figure 2, les extrémités libres des languettes 240 qui émergent par rapport à la paroi de base 210 sont référencées 241.

De plus les languettes 240 sont de préférence munies chacune sur leur face latérale opposée au plan de symétrie du corps de connecteur 230 d'une rampe de sollicitation 244.

Cette rampe de sollicitation 244 diverge de préférence par rapport au plan de symétrie du corps de connecteur 230 en rapprochant de la plaque de base 210.

Comme on l'expliquera par la suite, ces rampes 244 sont adaptées pour être sollicitées par le volant lors de la mise en place du contacteur.

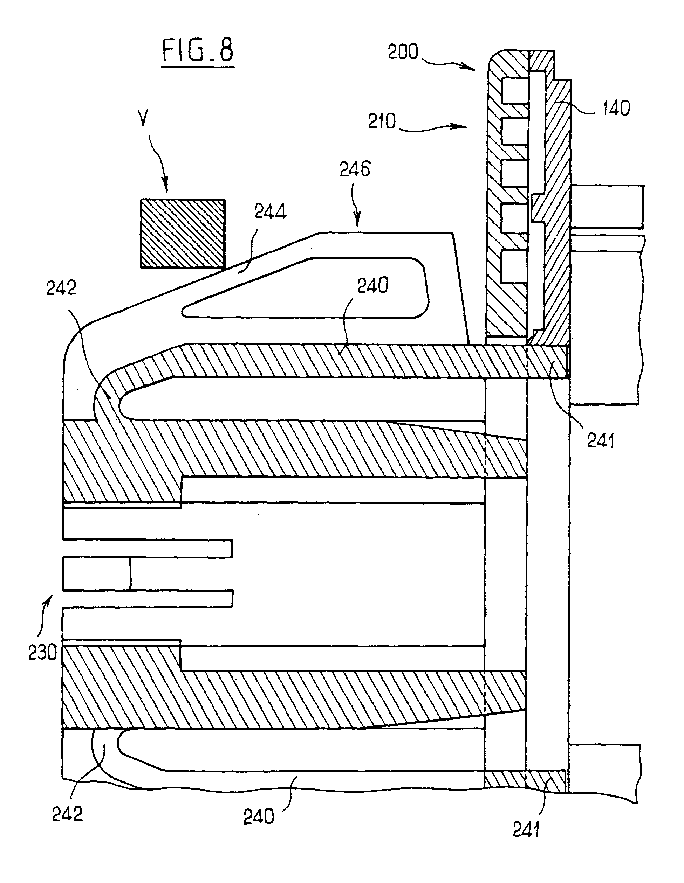

On peut prévoir pour celà par exemple sur le volant, une structure annulaire V, schématisé sur les figures 8 à 11, dont le rayon interne est compris entre le rayon minimal et le rayon maximal, par rapport à l'axe du couvercle 200, des rampes précitées 244.

Sur les figures annexées, on a schématisé une telle structure annulaire V sous forme d'une section droite rectangulaire. Cette structure peut cependant faire l'objet de nombreuses variantes.

Selon le mode de réalisation non limitatif représenté sur les figures annexées ces rampes 244 sont formées de nervures 246 venues de moulage sur les flancs des languettes 240.

Par ailleurs le boitier 100 est muni d'encoches 142 aptes à recevoir au repos les extrémités 142 des languettes 140. Les encoches 142 sont adaptées pour interdire au repos toute rotation relative entre le couvercle 200 et le boitier 100.

Les encoches 142 peuvent être formées sur l'ensemble précité composé des parois 110, 112 et 114 ou encore sur tout sous-ensemble lié à ce boitier 100, par exemple sur une couronne 140 liée à ce boitier 100 pour obturer au moins partiellement le contour d'ouverture de la chambre 116.

Selon le mode de réalisation préférentiel représenté sur les figures annexées, il est ainsi prévu deux encoches 142 sur la périphérie interne de la couronne 140. Ces encoches 142 présentent une symétrie par rapport à un plan axial de la couronne 140.

Plus précisément encore les encoches 142 sont adaptées pour autoriser un déplacement des languettes 240, de sorte que après déformation de celles-ci, ces languettes 240 n'interfèrent plus avec les encoches 142, ni la couronne 140. De préférence chaque encoche 142 est ainsi formée de deux surfaces planes 143, 144 orthogonales entre elles : une première surface 143 perpendiculaire au plan de symétrie précité et une 'seconde surface 144 parallèle à ce plan de symétrie et dirigée vers celui-ci. Les deux surfaces 143 et 144 débouchent dans le canal interne de la couronne 140.

Lors de l'assemblage du contacteur, les extrémités 241 des languettes 240 sont placées dans les encoches 142. Les languettes 240 sont rappelées élastiquement au repos vers les surfaces 144 par les zones d'articulation 242. La coopération ainsi définie entre les languettes 240 et les encoches 142 interdit par conséquent toute rotation entre le couvercle 200 et le boitier 100.

De préférence cet assemblage verrouillé est opéré en position milieu du contacteur, c'est à dire en position médiane de la course relative autorisée entre le couvercle 200 et le boitier 100. Cette disposition permet de garantir le fonctionnement du contacteur par la suite.

Généralement le contacteur ainsi assemblé est fixé sur le sommet de la colonne de direction, par son boitier 100 est les points d'ancrage 120.

Lors de la mise en place du volant la structure annulaire V de celui-ci vient solliciter les rampes 244. Par conséquent les languettes 240 sont déformées élastiquement en rapprochement de sorte que les languettes échappent aux encoches 142. Le couvercle 200 est alors rendu libre de pivotement par rapport au boitier 100.

On notera également que les languettes 244 ainsi déformées élastiquement et sollicitées par la structure annulaire V permettent de supprimer tout jeu entre le volant V et le couvercle 200 et par conséquent de réduire le bruit de fonctionnement du contacteur.

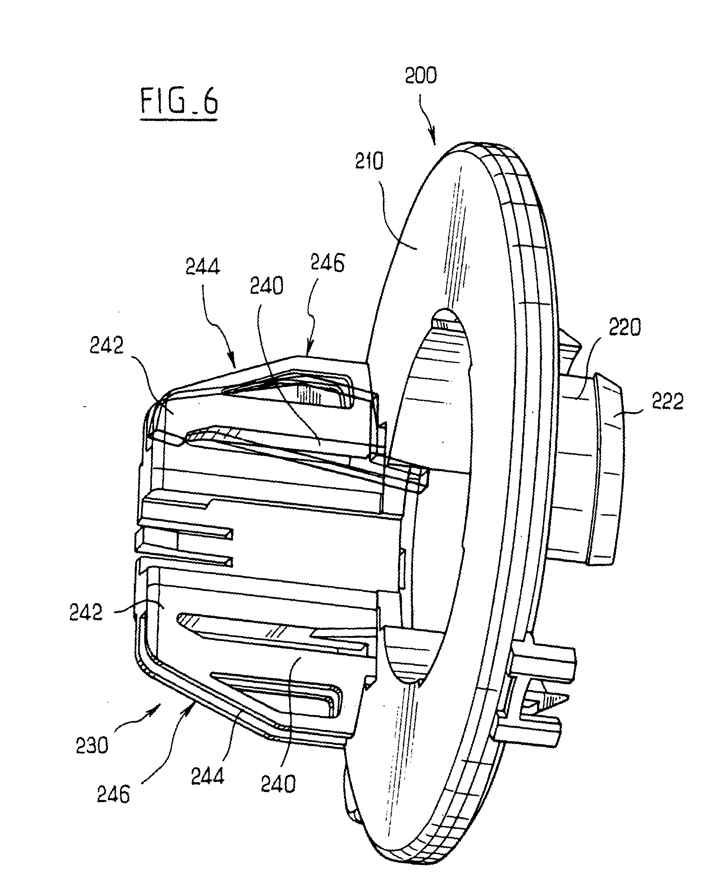

La déformation des languettes 240 par la structure V du volant est illustrée notamment sur les figures 6 et 9 à 11.

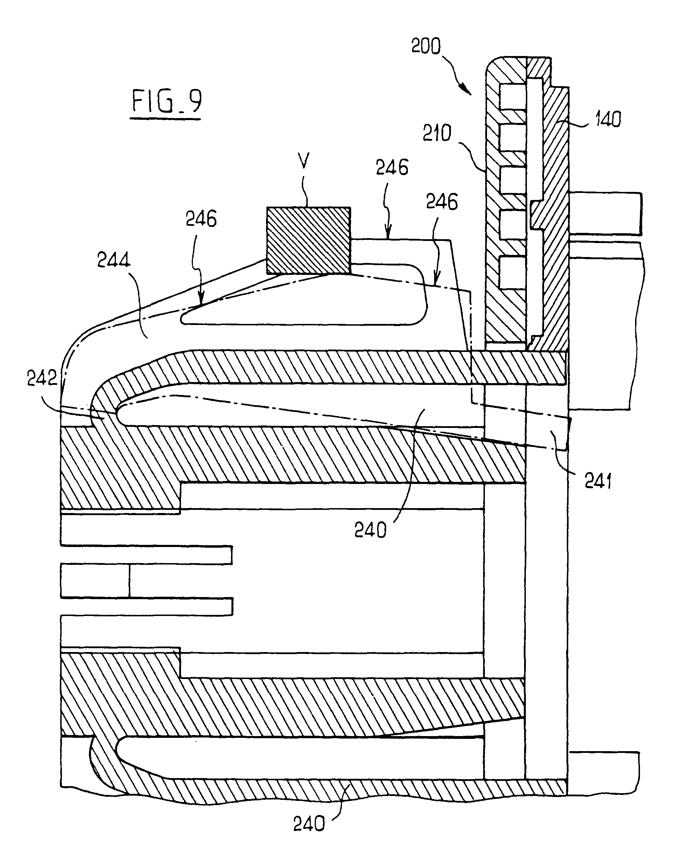

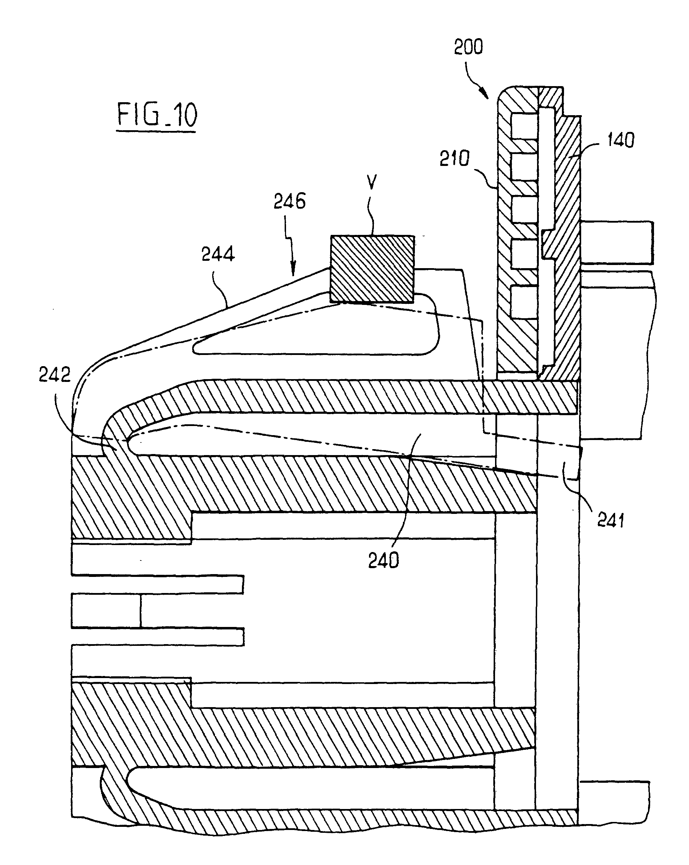

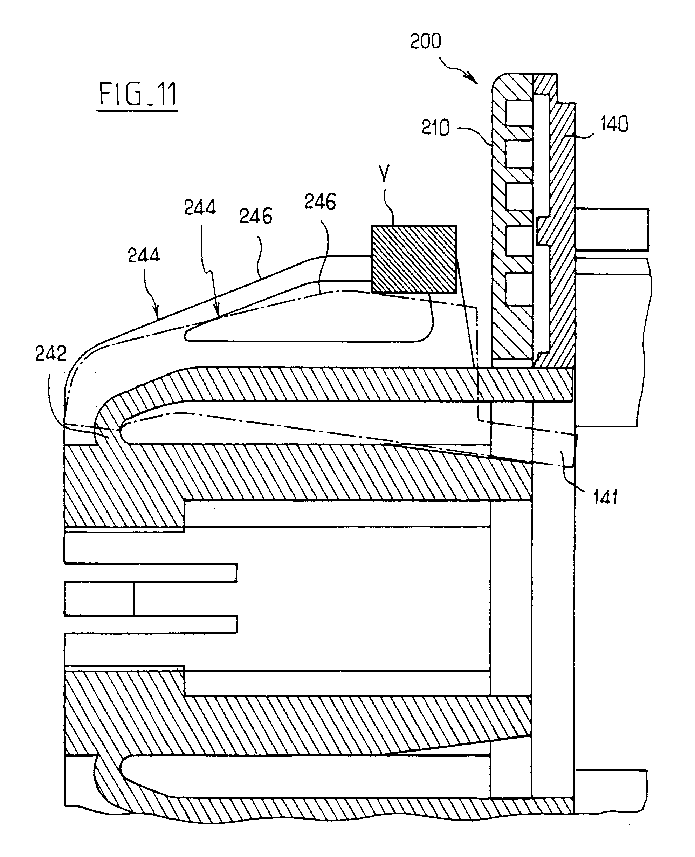

On comprend à l'examen des figures 9 à 11 que de préférence la structure des rampes 244 est adaptée pour permettre une sollicitation des languettes 240 par la structure V, et par conséquent un déverrouillage de ces languettes 240, dans une large plage de positionnement axial du volant. Sur la figure 10 le volant est schématisé dans sa position nominale, tandis qu'il est représenté en position minimale sur la figure 9 et en position maximale sur la figure 11.

Bien entendu la présente invention n'est pas limitée au mode de réalisation particulier qui vient d'être décrit mais s'étend à toute variante conforme à son esprit.

Ainsi selon le mode de réalisation précité on a envisagé une mise en place initiale et une fixation du contacteur sur le sommet de la colonne de direction de sorte que les languettes 240 sont sollicitées par le volant V lors de la mise en place de celui-ci. En variante cependant on peut envisager une mise en place initiale et une fixation du contacteur sur le volant en inversant le contacteur, de sorte que les languettes 240 soient sollicitées par le sommet de la colonne de direction lors de la mise en place du volant sur celle-ci.

Par ailleurs on peut prévoir d'aménager les languettes de verrouillage 240 sur le boîtier 100 et non pas sur le couvercle 200, voire à la fois sur le boîtier 100 et sur le couvercle 200, ou encore prévoir des languettes anti-jeu 240 sur le boitier 100 pour supprimer le jeu entre le boitier 100 et l'organe recevant celui-ci, par exemple le sommet de la colonne de direction, voire prévoir des languettes anti-jeu 240 à la fois sur le boitier 100 et sur le couvercle 200, de sorte que ces languettes 240 suppriment le jeu entre le boitier 100, le couvercle 200 et respectivement les organes recevant ceux-ci, soit par exemple le sommet de la colonne de direction pour le boitier 100 et le volant pour le couvercle 200 ou inversement.

On comprend à la lecture qui précède que le contacteur conforme à la présente invention permet non seulement de supprimer le jeu de fonctionnement entre les éléments du contacteur et les organes qui reçoivent ceux-ci, mais également permet de verrouiller le contacteur dans une position préréglée, avantageusement dans une position point milieu, dés son assemblage et jusqu'à l'assemblage du volant sur véhicule.

Par ailleurs le déverrouillage est assuré par le montage du volant sur le véhicule sans intervention manuelle ou autre.

De même les languettes 240 peuvent être sollicitées vers le boitier 100 par des moyens ressort rapportés indépendants des zones charnières 242.

## Revendications

1. Contacteur électrique tournant comprenant deux éléments (100, 200) susceptibles de rotation relative et un conducteur souple (300) placé entre ces deux éléments, l'un au moins (200) de ces éléments (100, 200) comprenant deux languettes élastiques (240) adaptées pour être sollicitées à déplacement lors de la mise en place du contacteur sur son site d'utilisation, **caractérisé par le fait que** lesdites languettes (240) sont venues de moulage respectivement sur les flancs d'un corps de connecteur électrique (230) formé d'un bloc venu de moulage avec l'élément (200) qui le porte, le corps de connecteur (230) présentant une symétrie par rapport à un plan axial et les languettes élastiques (240) étant symétriques par rapport à ce plan axial et rappelées élastiquement au repos vers l'autre élément (100) tout en étant adaptées pour être sollicitées en éloignement de cet autre élément (100) lors de la mise en place du contacteur sur son site d'utilisation, de sorte que au repos les languettes (240) verrouillent les deux éléments (100, 200) dans une position d'assemblage pré-définie tandis que les languettes (240) libèrent automatiquement ces deux éléments (100,200) lors de la mise en place du contacteur.

2. Contacteur selon la revendication 1, **caractérisé par le fait que** lesdites languettes (240) sont adaptées pour supprimer le jeu entre l'élément (200) qui les porte et l'organe associé (V) qui reçoit celui-ci sur le site d'utilisation, par exemple le volant du véhicule automobile.

3. Contacteur selon l'une des revendications 1 ou 2, **caractérisé par** le lait que chaque languette (240) s'étend dans une direction générale axiale.

4. Contacteur selon l'une des revendications 1 à 3, **caractérisé par le fait que** chaque languette (240) se raccorde sur le sommet d'un corps de connecteur (230) par l'intermédiaire d'une zone d'articulation venue de matière (242) de faible largeur.

5. Contacteur selon la revendication 4, **caractérisé par le fait que** chaque languette (240) a une longueur supérieure à celle du corps de connecteur (230).

6. Contacteur selon l'une des revendications 1 à 5, **caractérisé par le fait que** chaque languette (240) traverse, libre de déplacement, une plaque de base (210) de l'élément (200) qui la porte, au niveau d'une lumière (212) formée dans celle-ci.

7. Contacteur selon la revendication 6, **caractérisé par le fait que** chaque languette (240) s'étend au delà de la plaque de base (210).

8. Contacteur selon l'une des revendications 1 à 7, **caractérisé par le fait que** chaque languette (240) est munie d'une rampe de sollicitation (244).

9. Contacteur selon la revendication 8, **caractérisé par le fait que** les rampes de sollicitation (244) divergent par rapport au plan de symétrie en rapprochant de la plaque de base (210).

10. Contacteur selon l'une des revendications 1 à 9, **caractérisé par le fait que** l'autre élément (100) est muni d'au moins une encoche (142) apte à recevoir au repos l'extrémité (241) de la languette (240).

11. Contacteur selon la revendication 10, **caractérisé par le fait que** l'autre élément (100) comprend deux encoches (142) symétriques par rapport à un plan axial.

12. Contacteur selon l'une des revendications 10 ou 11, **caractérisé par le fait que** chaque encoche (142) est formée de deux surfaces planes (143, 144) orthogonales entre elles : une première surface (143) perpendiculaire au plan de symétrie précité et une seconde surface (144) parallèle à ce plan de symétrie et dirigée vers celui-ci.

13. Contacteur selon l'une des revendications 1 à 12, **caractérisé par le fait que** chaque languette (240) est adaptée pour verrouiller le contacteur en position milieu.

14. Contacteur selon l'une des revendications 1 à 13, **caractérisé par le fait que** les languettes (240) sont prévues sur un couvercle pivotant (200) du contacteur.

15. Contacteur selon l'une des revendications 1 à 13, **caractérisé par le fait que** les languettes (240) sont prévues sur un boitier fixe (100) du contacteur.

16. Contacteur selon l'une des revendications 1 à 15, **caractérisé par le fait qu'**il est prévu au moins une languette (240) sur un couvercle pivotant (200) du contacteur et au moins une languette (240) sur un boitier fixe (100) du contacteur.

17. Contacteur selon l'une des revendications 1 à 16, **caractérisé par le fait que** chaque languette (240) est sollicitée par des moyens ressort rapportés indépendants.

18. Contacteur selon l'une des revendications 1 à 17, **caractérisé par le fait qu'**il est adapté pour assurer un déplacement de chaque languette élastique (240) et un déverrouillage du contacteur par le montage d'un volant sur un véhicule automobile sans intervention manuelle ou autre.

## Patentansprüche

1. Drehbarer elektrischer Verbinder mit zwei Elementen (100, 200), die Relativbewegungen ausführen können, und einem biegsamen Leiter (300), angebracht zwischen diesen beiden Elementen (100, 200), wobei wenigstens das eine (200) dieser Elemente (100, 200) zwei elastische Spreizeinrichtungen (240) umfasst, die so angepasst sind, dass sie beim Anbringen des Verbinders an seinem Einsatzort einer Verschiebebelastung ausgesetzt sind,
**dadurch gekennzeichnet,**
**dass** die beiden Spreizeinrichtungen (240) jeweils angegossen sind auf den Flanken eines elektrischen Verbindungskörpers (230), gebildet aus einem Gussblock mit dem Element (200), das ihn trägt, wobei der Verbindungskörper (230) eine Symmetrie in Bezug auf eine axiale Ebene aufweist und die elastischen Spreizeinrichtungen (240) bezüglich dieser axialen Ebene symmetrisch sind und in Ruhestellung elastisch rückgestellt werden gegen das andere Element (100) und dabei angepasst sind, bei Entfernung von diesem anderen Element (100) beim Anbringen des Verbinders an seinem Einsatzort belastet zu werden, so dass die Spreizeinrichtungen (240) in Ruhestellung die beiden Elemente (100, 200) in einer bestimmten Zusammenbaustellung verriegeln, während die Spreizeinrichtungen (240) diese beiden Elemente (100, 200) beim Anbringen des Verbinders automatisch freigeben.

2. Verbinder nach Anspruch 1, **dadurch gekennzeichnet, dass** die genannten Spreizeinrichtungen (240) angepasst sind, das Spiel zu beseitigen zwischen dem Element (200), das sie trägt, und dem zugeordneten Organ (V), das dieses aufnimmt am Einsatzort, z.B. dem Steuerrad des Kraftfahrzeugs.

3. Verbinder nach einem der Ansprüche 1 oder 2, **dadurch gekennzeichnet, dass** jede Spreizeinrichtung (240) sich in einer axialen Hauptrichtung erstreckt.

4. Verbinder nach einem der Ansprüche 1 bis 3, **dadurch gekennzeichnet, dass** jede Spreizeinrichtung (240) mit dem Verbindungskörper (230) an dessen Spitze durch eine mitangegossene Gelenkzone (242) von geringer Breite verbunden ist.

5. Verbinder nach Anspruch 4, **dadurch gekennzeichnet, dass** jede Spreizeinrichtung (240) eine größere Länge als der Verbindungskörper (230) aufweist.

6. Verbinder nach einem der Ansprüche 1 bis 5, **dadurch gekennzeichnet, dass** jede Spreizeinrichtung (240) bewegungs- bzw. verschiebungsfrei eine Grundplatte (210) des sie tragenden Elements (200) durchquert, in Höhe eines Schlitz- bzw. Langlochs (212).

7. Verbinder nach Anspruch 6, **dadurch gekennzeichnet, dass** jede Spreizeinrichtung (240) sich über die Grundplatte (210) hinaus erstreckt.

8. Verbinder nach Anspruch 1 bis 7, **dadurch gekennzeichnet, dass** jede Spreizeinrichtung (240) mit einer Belastungsrampe (244) versehen ist.

9. Verbinder nach Anspruch 8, **dadurch gekennzeichnet, dass** die Belastungsrampen (244) in Richtung Grundplatte (210) in Bezug auf die Symmetrieebene divergieren.

10. Verbinder nach Anspruch 1 bis 9, **dadurch gekennzeichnet, dass** das andere Element (100) mit wenigstens einer Kerbe (142) versehen ist, die in Ruhestellung das Ende (241) der Spreizeinrichtung (240) aufnimmt.

11. Verbinder nach Anspruch 10, **dadurch gekennzeichnet, dass** das andere Element (100) zwei Kerben (142) umfasst, symmetrisch in Bezug auf eine axiale Ebene.

12. Verbinder nach einem der Ansprüche 10 oder 11, **dadurch gekennzeichnet, dass** jede Kerbe (142) gebildet wird durch zwei zueinander rechtwinklige ebene Flächen (143, 144): eine erste Fläche (143), senkrecht zur genannten Symmetrieebene, und eine zweite Fläche (144), parallel zu dieser Symmetrieebene und dieser zugewandt.

13. Verbinder nach einem der Ansprüche 1 bis 12, **dadurch gekennzeichnet, dass** jede Spreizeinrichtung (240) angepasst ist, um den Verbinder in der Mittelstellung zu verriegeln.

14. Verbinder nach einem der Ansprüche 1 bis 13, **dadurch gekennzeichnet, dass** die Spreizeinrichtungen (240) auf einem schwenk- bzw. drehbaren Deckel des Verbinders (200) vorgesehen sind.

15. Verbinder nach einem der Ansprüche 1 bis 13, **dadurch gekennzeichnet, dass** die Spreizeinrichtungen (240) auf einem feststehenden Gehäuse (100) des Verbinders vorgesehen sind.

16. Verbinder nach einem der Ansprüche 1 bis 15, **dadurch gekennzeichnet, dass** wenigstens eine Spreizeinrichtung (240) auf einem drehbaren Deckel (200) des Verbinders vorgesehen ist, und wenigstens eine Spreizeinrichtung (240) auf einem feststehenden Gehäuse (100) der Verbinders vorgesehen ist.

17. Verbinder nach einem der Ansprüche 1 bis 16, **dadurch gekennzeichnet, dass** jede Spreizeinrichtung (240) durch unabhängige angebaute Federeinrichtungen belastet wird.

18. Verbinder nach einem der Ansprüche 1 bis 17, **dadurch gekennzeichnet, dass** er angepasst ist, um eine Verschiebung jeder elastischen Spreizeinrichtung (240) und eine Entriegelung des Verbinders durch die Montage eines Kraftfahrzeugsteuerrads sicherzustellen, ohne manuelles oder anderes Eingreifen.

## Claims

1. A rotary electrical contactor comprising two elements (100, 200) that can be rotated relative to each other and a flexible conductor (300) placed between the two elements, at least one (200) of the elements (100, 200) comprising two resilient tabs (240) adapted to be urged in displacement on putting the contactor in place on its site of use, **characterized in that** the said tabs (240) are integrally moulded on respective sides of a body of an electrical connector (230) formed from a block integrally moulded with the element (200) which carries it, the body of the connector (230) having symmetry relative to an axial plane and the resilient tabs (240) being symmetrical relative to this axial plane and resiliently biased, at rest, towards the other element (100) while being adapted to be forced away from this other element (100) on putting the contactor in place on its site of use, so that the tabs (240), when at rest, lock the two elements (100, 200) in a pre-defined assembly position, while the tabs (240) automatically release the two elements (100, 200) on putting the contactor in place.

2. A contactor according to claim 1, **characterized in that** the said tabs (240) are adapted to take up the play between the element (200) that carries them and the associated member (V) that receives this element on the site on which the contactor is to be used, for example the steering wheel of a motor vehicle.

3. A contactor according to claim 1 or 2, **characterized in that** each tab (240) extends in a general direction that is axial.

4. A contactor according to any one of claims 1 to 3, **characterized in that** each tab (240) is connected to the top of a connector body (230) via an integral hinge zone (242) of small width.

5. A contactor according to claim 4, **characterized in that** each tab (240) is longer than the connector body (230).

6. A contactor according to any one of claims 1 to 5, **characterized in that** each tab (240) passes freely through a base plate (210) of the element (200) that carries it, via a slot (212) formed therein.

7. A contactor according to claim 6, **characterized in that** each tab (240) extends beyond the base plate (210).

8. A contactor according to any one of claims 1 to 7, **characterized in that** each tab (240) is provided with a force-transferring ramp (244).

9. A contactor according to claim 8, **characterized in that** the force-transferring ramps (244) diverge relative to the plane of symmetry going towards the base plate (210).

10. A contactor according to any one of claims 1 to 9, **characterized in that** the other element (100) is provided with at least one notch (142) suitable for receiving, at rest, the end(241) of the tab (240).

11. A contactor according to claim 10, **characterized in that** the other element (100) is provided with two notches (142) that are symmetrical relative to an axial plane.

12. A contactor according to claim 10 or 11, **characterized in that** each notch (142) is formed of two mutually orthogonal plane surfaces (143, 144), namely a first surface (143) perpendicular to the above-mentioned plane of symmetry, and a second surface (144) parallel to said plane of symmetry and facing it.

13. A contactor according to any one of claims 1 to 12, **characterized in that** each tab (240) is suitable for locking the contactor in a middle position.

14. A contactor according to any one of claims 1 to 13, **characterized in that** the tabs (240) are provided on a pivotally mounted cover (200) of the contactor.

15. A contactor according to any one of claims 1 to 13, **characterized in that** the tabs (240) are provided on a fixed box (100) of the contactor.

16. A contactor according to any one of claims 1 to 15, **characterized in that** at least one tab (240) is provided on a pivotally mounted cover (200) of the contactor, and at least one tab (240) is provided on a fixed box (100) of the contactor.

17. A contactor according to any one of claims 1 to 16, **characterized in that** each tab (240) is driven by independent non-integral spring means.

18. A contactor according to any one of claims 1 to 17, **characterized in that** it is suitable for enabling each resilient tab (240) to be displaced and the contactor to be unlocked by mounting a steering wheel on a motor vehicle, without any manual or other intervention.
